# FASCICULE DE BREVET EUROPEEN

(11) **EP 3 102 866 B1**
(45) Date de publication et mention de la délivrance du brevet: **19.07.2017**
(21) Numéro de dépôt: 15701796.3
(22) Date de dépôt: 29.01.2015
(51) Int. Cl.: B67D 9/00, F16L 37/248, F16L 37/36, F16L 37/252

(54) **DISPOSITIF DE CONNEXION POUR CONNECTER DEUX CIRCUITS DE FLUIDE**
VERBINDUNGSVORRICHTUNG ZUM VERBINDEN ZWEIER FLUIDLEITUNGEN
CONNECTION DEVICE FOR CONNECTING TWO FLUID CIRCUITS

(30) Priorité: 03.02.2014 FR 1450821
(43) Date de publication de la demande: 14.12.2016
(73) Titulaire: GAZTRANSPORT ET TECHNIGAZ, 78470 Saint Rémy Lès Chevreuse (FR)
(72) Inventeur: GELIN, Guillaume, 91120 Palaiseau (FR)
(74) Mandataire: Loyer & Abello
(86) Numéro de dépôt international: PCT/EP2015/051841
(87) Numéro de publication internationale: WO 2015/114058

(56) Documents cités:
- WO-A1-82/01929
- DE-A1-102012 209 629
- FR-A2- 2 311 989
- US-A- 4 826 354
- US-A1- 2005 103 387
- US-A1- 2010 263 389
- US-A1- 2013 146 146

## Description

### Domaine technique

L'invention se rapporte au domaine des dispositifs de connexion pour connecter deux circuits de fluide dangereux. L'invention se rapporte plus précisément aux éléments de connexion/déconnexion permettant de connecter et déconnecter un tuyau plein de Gaz Naturel Liquéfié (GNL) sans risquer de générer une atmosphère explosive ou dangereuse.

### Arrière-plan technologique

Le transfert du GNL est réalisé à l'aide de tuyaux, notamment de tuyaux flexibles. Chaque tuyau comporte un connecteur adapté pour coopérer avec le connecteur de l'autre tuyau. La connexion de deux connecteurs forme un passage étanche entre les tuyaux, permettant ainsi le transfert de fluide.

La vaporisation du GNL en cas de fuite rend nécessaire l'utilisation d'un dispositif de connexion présentant un haut degré de sécurité pour le transfert de fluide. En particulier, il est important d'éviter la formation d'une atmosphère explosive en cas de fuite des organes de fermeture, y compris lors de la connexion ou de la déconnexion.

Le document US2005/0103387 décrit un dispositif de connexion comportant un connecteur mâle et un connecteur femelle. Le document US4,826,354 décrit une canalisation de transfert de GNL sous-marine.

### Résumé

Selon un mode de réalisation, l'invention fournit un dispositif de connexion pour connecter deux circuits de fluide, le dispositif de connexion comportant un premier connecteur destiné à être monté sur un premier circuit de fluide et un second connecteur destiné à être monté sur un second circuit de fluide,
dans lequel chaque connecteur comporte :
- une conduite de fluide présentant une première extrémité destinée à être montée sur le circuit de fluide et une seconde extrémité destinée à coopérer avec la seconde extrémité de la conduite de l'autre connecteur pour former un passage de fluide entre le premier connecteur et le second connecteur,
- une première valve située dans la conduite de fluide et apte à sélectivement obstruer ou libérer un espace intérieur de la conduite de fluide,
- une seconde valve située dans la conduite de fluide entre la première valve et la première extrémité du connecteur et apte à sélectivement obstruer ou libérer l'espace intérieur de la conduite,
- dans lequel l'espace intérieur de la conduite de fluide comporte un espace tampon délimité par une paroi interne de la conduite de fluide, la première valve et la seconde valve,
- un premier actionneur apte à actionner la première valve entre une position ouverte libérant la conduite et une position fermée obstruant de manière étanche la conduite de fluide,
- un second actionneur apte à actionner la seconde valve entre une position ouverte libérant la conduite et une position fermée obstruant la conduite de manière étanche,
le dispositif de connexion comportant en outre un élément d'accouplement apte à accoupler de manière étanche dans une position d'accouplement les deux connecteurs de sorte que les espaces intérieurs des conduites de fluide des deux connecteurs sont reliés de manière étanche au niveau des secondes extrémités des conduites et forment, entre les premières valves des deux connecteurs, un espace inter-connecteurs étanche par rapport à l'extérieur des conduites de fluide.

Selon des modes de réalisation, un tel dispositif de connexion peut comporter une ou plusieurs des caractéristiques suivantes.

Selon un mode de réalisation,
- un des connecteurs comporte une arrivée de gaz de balayage débouchant dans l'espace tampon et destinée à être connectée à une source d'alimentation en gaz de balayage et apte à injecter du gaz de balayage dans l'espace tampon du connecteur, et
- un des connecteurs comporte une sortie de gaz et/ou liquide débouchant dans l'espace tampon et apte à évacuer le gaz et/ou le liquide contenu dans l'espace tampon dudit connecteur.

Selon un mode de réalisation,
- un des connecteurs comporte une arrivée de gaz de balayage débouchant dans la conduite entre la première valve et la seconde extrémité dudit connecteur et destiné à être connectée à une source d'alimentation en gaz de balayage et apte à injecter du gaz de balayage dans l'espace inter-connecteur, et
- un des connecteurs comporte une sortie de gaz et/ou liquide débouchant dans la conduite entre la première valve et la seconde extrémité dudit connecteur et apte à évacuer le gaz et/ou le liquide contenu dans l'espace inter-connecteur

Selon un mode de réalisation, l'arrivée de gaz de balayage et la sortie de gaz et/ou liquide sont situées sur un seul et même connecteur.

Selon un mode de réalisation, l'arrivée de gaz de balayage et la sortie de gaz et/ou liquide sont situées sur deux connecteurs distincts.

Selon un mode de réalisation, le second actionneur coopère avec la première valve de manière à asservir mécaniquement un état fermé de la première valve à un état fermé de la seconde valve et asservir mécaniquement un état ouvert de la seconde valve à un état ouvert de la première valve.

Un tel asservissement mécanique peut être réalisé par différents éléments, par exemple au moyen d'un poussoir et de ressorts de rappels lorsque les valves sont commutables par translation, ou encore au moyen d'engrenages, de pignons et crémaillères, de cames hélicoïdales ou d'autre moyens de liaison mécaniques, notamment lorsque au moins l'une des valves est commutable par rotation.

Selon un mode de réalisation, le dispositif de connexion comporte en outre un organe de verrouillage asservi mécaniquement à la première valve et coopérant avec la seconde valve pour asservir un état fermé de la première valve à un état verrouillé de la seconde valve et asservir un état ouvert de la première valve à un état déverrouillé de la seconde valve.

Selon un mode de réalisation, la première valve de chaque connecteur comporte :
- un premier siège de clapet fixé dans l'espace intérieur de la conduite,
- un premier clapet mobile en translation selon la direction de la conduite de fluide par rapport au premier siège de clapet et destiné à coopérer avec le premier siège de clapet du côté de la seconde extrémité de la conduite afin d'obstruer de manière étanche la conduite de fluide du connecteur,
- un premier élément de rappel apte à exercer une première force de rappel repoussant le premier clapet contre le premier siège de clapet en direction de la seconde extrémité de la conduite en l'absence de force opposée,
et le premier actionneur de chaque connecteur comporte une première tige d'activation faisant saillie depuis une face du premier clapet opposée à l'espace tampon. Les premières tiges d'activation des deux connecteurs sont destinées à coopérer en butée lors du rapprochement des connecteurs. La butée des premières tiges d'activation bloque le rapprochement des premiers clapets sans empêcher le rapprochement des connecteurs. Ce blocage du rapprochement des premiers clapets se fait à l'encontre de la première force de rappel de chaque premier clapet. Ainsi, dans des états accouplés des deux connecteurs, la butée des premières tiges d'activations maintient les premiers clapets à distance des premiers sièges de clapet.

Selon un mode de réalisation, la seconde valve de chaque connecteur comporte :
- Un second siège de clapet fixé dans l'espace intérieur de la conduite de fluide entre le premier siège de clapet et la première extrémité de la conduite de fluide,
- Un second clapet mobile en translation selon la direction de la conduite par rapport au second siège de clapet et destiné à coopérer avec le second siège de clapet du côté de la seconde extrémité de la conduite de façon à obstruer de manière étanche la conduite de fluide,
- Un second élément de rappel apte à exercer sur le second clapet une seconde force de rappel repoussant le second clapet contre le second siège de clapet en direction de la seconde extrémité de la conduite en l'absence de force opposée,
et le second actionneur de chaque connecteur comporte une seconde tige d'activation s'étendant entre le premier clapet et le second clapet, la seconde tige d'activation de chaque connecteur étant destinée à transmettre le déplacement du premier clapet au second clapet afin de repousser le second clapet à l'encontre de la seconde force de rappel du second clapet en réponse au déplacement du premier clapet lorsque les deux connecteurs sont rapprochés l'un de l'autre en vue de leur accouplement de sorte que, dans une position entièrement connectée des deux connecteurs, la poussée des secondes tiges d'activation sur une face interne des seconds clapets en vis-à-vis des premiers clapets maintient les seconds clapets à distance des seconds sièges de clapet.

Selon un mode de réalisation, le dispositif de connexion comporte en outre un mécanisme de blocage apte à bloquer la translation relative des connecteurs d'une part dans la position entièrement connectée et d'autre part dans une position de connexion intermédiaire, la position de connexion intermédiaire étant située entre une position déconnectée et la position entièrement connectée, la position déconnectée correspondant à une position dans laquelle les connecteurs sont disjoints et les valves de chaque connecteur sont fermées, la position de connexion intermédiaire étant caractérisée par le fait que :
- les conduites de fluide sont reliées de manière étanche l'une à l'autre,
- les premières valves de chaque connecteur sont ouvertes de sorte que les espaces tampons des deux connecteurs sont en communication l'un avec l'autre,
- les secondes valves de chaque connecteur sont fermées et obstruent les conduites de fluides.

Selon un mode de réalisation, le mécanisme de blocage est en outre apte à bloquer la translation relative des connecteurs dans une position pré-connectée située entre la position déconnectée et la position de connexion intermédiaire, la position pré-connectée étant caractérisée par le fait que les connecteurs sont reliés de manière étanche l'un à l'autre et les premières et secondes valves de chaque connecteur sont fermées.

Selon un mode de réalisation, le mécanisme de blocage en translation relative des connecteurs comporte :
- Une bague cylindrique montée, par exemple libre en rotation, sur la conduite du premier connecteur, la bague étant munie d'une rainure,
- un ergot complémentaire de la rainure fixé sur le second connecteur, par exemple situé sur une face latérale externe de la conduite du second connecteur,
et la rainure comporte :
- une section d'insertion dont une première extrémité forme une ouverture de la rainure sur une tranche de la bague, l'ouverture de la rainure étant destinée à recevoir l'ergot, la section d'insertion se développant selon une direction non transversale à la direction de la conduite de fluide du premier connecteur,
- éventuellement, une première section de blocage se développant selon une direction circonférentielle de la conduite de fluide du premier connecteur depuis la section d'insertion, la première section de blocage étant destinée à bloquer le rapprochement en translation des connecteurs dans la position pré-connectée,
- éventuellement, une première section de liaison se développant selon une direction non transversale à la direction de la conduite de fluide du premier connecteur depuis la première section de blocage,
- une seconde section de blocage se développant selon une direction circonférentielle de la conduite de fluide du premier connecteur depuis la première section de liaison ou depuis la section d'insertion si on se passe des premières sections ci-dessus, la seconde section de blocage étant destinée à bloquer le rapprochement en translation des connecteurs dans la position de connexion intermédiaire,
- une seconde section de liaison se développant selon une direction non transversale à la direction de la conduite de fluide du premier connecteur depuis la seconde section de blocage,
- une section d'accouplement se développant selon une direction circonférentielle de la conduite de fluide du premier connecteur depuis la seconde section de liaison, la section d'accouplement étant destinée à bloquer les connecteurs dans une position d'accouplement entièrement connectée.

Selon un mode de réalisation, l'invention fournit aussi un système de transfert pour un produit fluide, le système comportant un navire, une première canalisation et une seconde canalisation connectées ensemble par un dispositif de connexion tel que ci-dessus, les canalisations étant agencées de manière à relier une cuve installée dans une coque du navire à une installation de stockage flottante ou terrestre. Dans un mode de réalisation, le système de transfert comporte une pompe pour entrainer un flux de produit liquide froid à travers les canalisations isolées depuis ou vers l'installation de stockage flottante ou terrestre vers ou depuis la cuve du navire.

Selon un mode de réalisation, l'invention fournit aussi une utilisation du dispositif de connexion tel que ci-dessus pour connecter deux canalisations comportant chacune un connecteur du dispositif de connexion, dans laquelle :
- On accouple les deux conduites de fluide dans une position d'accouplement dans laquelle les espaces intérieurs des conduites de fluide des deux connecteurs sont reliées au niveau des secondes extrémités des conduites de manière à former un passage étanche entre les conduites de fluide des deux connecteurs,
- On ouvre la première valve du premier connecteur de manière à libérer l'espace interne de la conduite de fluide du premier connecteur,
- On ouvre la première valve du second connecteur de manière à libérer l'espace interne de la conduire de fluide du second connecteur,
- on ouvre la seconde valve du premier connecteur de manière à libérer l'espace interne de la conduire de fluide du premier connecteur,
- on ouvre la seconde valve du second connecteur de manière à libérer l'espace interne de la conduire de fluide du second connecteur.

Selon un mode de réalisation, l'ouverture des premières valves est simultanée dans les deux connecteurs.

Selon un mode de réalisation, l'ouverture des secondes valves est simultanée dans les deux connecteurs.

Selon un mode de réalisation, l'utilisation comporte en outre, entre l'ouverture des premières valves des deux connecteurs et l'ouverture des secondes valves des deux connecteurs :
- l'ouverture de l'arrivée de gaz de balayage,
- l'ouverture de la sortie de gaz et/ou de liquide,
- l'injection de gaz de balayage dans les espaces tampons des deux connecteurs et dans le passage étanche à travers l'arrivée de gaz de balayage,
- l'évacuation simultanée du gaz contenu dans les espaces tampons des deux connecteurs et dans l'espace inter-connecteurs à travers la sortie de gaz de manière à remplir de gaz de balayage tout l'espace compris entre les secondes valves.

Selon un mode de réalisation, l'invention fournit aussi une utilisation pour déconnecter deux canalisations comportant chacune un connecteur du dispositif de connexion, dans laquelle :
- on ferme la seconde valve d'un premier connecteur de manière à obstruer la conduite de fluide du premier connecteur,
- on ferme la seconde valve d'un second connecteur de manière à obstruer la conduite de fluide du second connecteur,
- on ferme la première valve du premier connecteur, de manière à obstruer la conduite de fluide du premier connecteur,
- on ferme la première valve du second connecteur de manière à obstruer la conduite de fluide du second connecteur,
on sépare les secondes extrémités des conduites de fluide.

Selon un mode de réalisation, la fermeture des premières valves est simultanée dans les deux connecteurs. Selon un mode de réalisation, la fermeture des secondes valves est simultanée dans les deux connecteurs.

Selon un mode de réalisation, l'utilisation comporte en outre, entre la fermeture des premières valves des deux connecteurs et la séparation des secondes extrémités des conduites des deux connecteurs :
- l'ouverture de l'arrivée de gaz de balayage,
- l'ouverture de la sortie de gaz et/ou de liquide,
- l'injection de gaz de balayage dans les espaces tampons des deux connecteurs et dans l'espace inter-connecteurs à travers l'arrivée de gaz de balayage,
- l'évacuation simultanée du gaz contenu dans les espaces tampons des deux connecteurs et dans l'espace inter-connecteurs à travers la sortie de gaz de manière à remplir de gaz de balayage tout l'espace compris entre les secondes valves.

Certains aspects de l'invention partent de l'idée d'améliorer le niveau de sécurité de la connexion entre deux canalisations servant pour le transfert de fluide dangereux.

Certains aspects de l'invention partent de l'idée d'améliorer la vitesse de connexion/déconnexion de connecteurs de tuyaux. Certains aspects de l'invention partent de l'idée de ne drainer, réchauffer et inerter qu'une portion réduite du système de transfert. Certains aspects de l'invention partent de l'idée de faire ces opérations au niveau d'un espace tampon défini dans les connecteurs.

Certains aspects de l'invention partent de l'idée de permettre la déconnexion sécurisée des tuyaux pleins de liquide dangereux. Certains aspects partent de l'idée d'empêcher un écoulement de GNL et ainsi la création d'une atmosphère explosive lors de la connexion et la déconnexion. Certains aspects de l'invention partent de l'idée de créer une double ségrégation qui isole le méthane en phase liquide et/ou gazeuse de l'air.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
- Les figures 1 à 5 sont des représentations schématiques en coupe d'un dispositif de connexion dans différentes positions lors de la connexion des deux connecteurs d'un dispositif de connexion.
- Les figures 6 à 7 sont des représentations schématiques en coupe du dispositif de connexion des figures 1 à 5 dans différentes positions lors d'une déconnexion des connecteurs.
- La figure 8 est une vue en perspective schématique d'un mode de réalisation d'un élément femelle d'un mécanisme de blocage en translation pouvant être utilisé dans les connecteurs.
- Les figures 9 à 11 sont des représentations schématiques en coupe de variantes de réalisation de connecteurs accouplés détaillant l'alimentation en gaz de balayage et la sortie de gaz et/ou de liquide de la zone tampon.
- La figure 12 est une représentation schématique écorchée d'une cuve de navire méthanier et d'un terminal de chargement/déchargement de cette cuve reliés par des flexibles comportant des connecteurs de dispositif de connexion tel que selon les figures 1 à 8.
- La figure 13 est une représentation schématique en coupe d'un dispositif de connexion selon un autre mode de réalisation.
- La figure 14 est une représentation schématique en coupe d'un connecteur selon un autre mode de réalisation.

### Description détaillée de modes de réalisation

Le transfert de fluide entre deux installations, par exemple des dispositifs de stockage de fluide, nécessite la connexion de deux canalisations 1. Chaque canalisation 1 comporte une première extrémité reliée directement ou indirectement dans l'installation correspondante et une seconde extrémité destinée à coopérer avec la seconde extrémité de l'autre canalisation 1. La connexion entre les deux canalisations 1 est assurée à l'aide d'un dispositif de connexion. Ce dispositif de connexion comporte un connecteur 2 monté à la seconde extrémité de chacune des canalisations 1 à connecter.

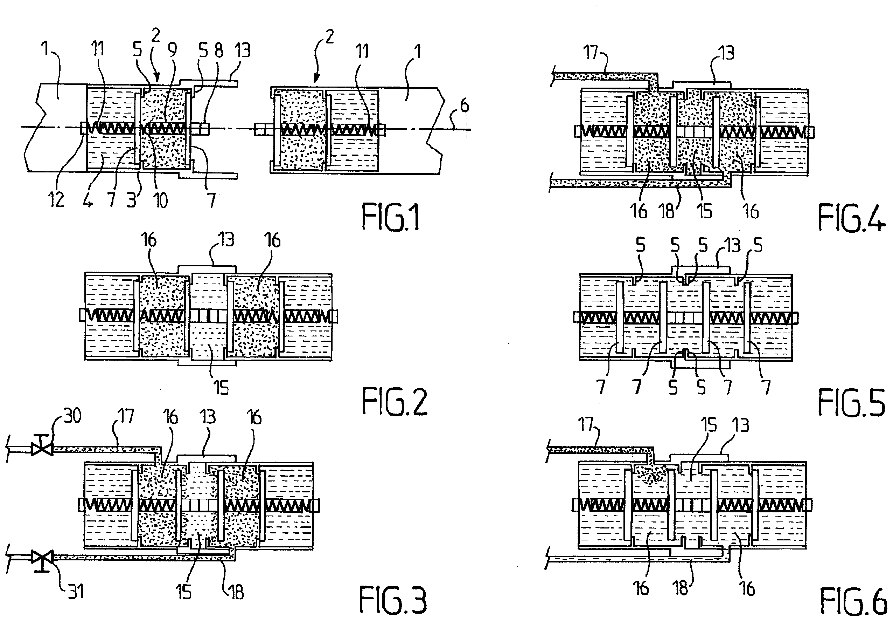

Les figures 1 à 5 représentent schématiquement un dispositif de connexion dans différentes positions lors de la connexion de deux connecteurs 2 montés chacun à l'extrémité d'une canalisation 1.

Un connecteur 2 comporte une enveloppe cylindrique creuse 3. Cette enveloppe 3 forme une conduite interne 4 prolongeant la canalisation 1. Le connecteur 2 comporte deux valves permettant d'obstruer ou de libérer la conduite 4. Chaque valve comporte un épaulement circulaire 5. Chaque épaulement 5 fait saillie radialement dans la conduite 4. Chaque épaulement 5 se développe dans un plan perpendiculaire à un axe longitudinal 6 de la conduite 4.

Chaque valve comporte également un clapet sous la forme d'un plateau circulaire 7. Chaque clapet 7 est logé dans la conduite 4. Un tel clapet 7 se développe dans un plan perpendiculaire à l'axe longitudinal 6. Le clapet 7 présente un diamètre inférieur au diamètre de la conduite 4 afin de permettre son coulissement dans la conduite 4 ainsi que l'écoulement de fluide lorsque ledit clapet n'est pas en contact étanche contre l'épaulement 5.

Le siège de clapet de la première valve est formé par un premier épaulement 5. Ce premier épaulement 5 est situé à une extrémité du connecteur 2 opposée à la canalisation 1. Le clapet de la première valve est formé par un premier clapet 7. Ce premier clapet 7 est logé dans la conduite entre le premier épaulement 5 et la canalisation 1.

Le siège de clapet de la seconde valve est formé par un second épaulement 5. Ce second épaulement 5 est situé dans la conduite 4 entre le premier épaulement 5 et le premier clapet 7. Le clapet de la seconde valve est formé par un second clapet circulaire 7. Ce second clapet 7 est logé dans la conduite entre le second épaulement 5 et la canalisation 1.

Le premier clapet 7 comporte sur une face externe une première tige d'activation 8. Cette première tige d'activation 8 est centrée sur le premier clapet 7. Le clapet 7 comporte également, sur une face interne opposée à la face externe et en vis-à-vis du second clapet 7, une seconde tige d'activation 9. Cette seconde tige d'activation 9 est centrée sur la face interne du premier clapet 7.

Un premier ressort de rappel 10 entoure la seconde tige d'activation 9. La seconde tige d'activation 9 forme un guide pour le premier ressort 10. Ce premier ressort 10 est maintenu en compression entre le premier clapet et le second clapet. Le premier ressort 10 exerce sur le premier clapet une force de rappel repoussant le premier clapet en direction du premier épaulement 5. Par réaction, le premier ressort 10 exerce sur le second clapet 7 une force de poussé en direction de la canalisation 1.

Un second ressort de rappel 11 est situé entre un élément fixe 12 de l'enveloppe 3 et le second clapet 7. Un tel élément fixe 12 est par exemple un plot fixé à l'enveloppe 3 et s'étendant radiaiement jusqu'au centre de la conduite 4 à une extrémité du connecteur 2 jointive de la canalisation 1. Le ressort 11 entoure une tige de guidage qui assure le maintien du ressort 11 en position entre l'élément fixe 12 et le second clapet 7. Le ressort 11 est maintenu en compression entre l'élément fixe 12 et le second clapet 7. Le ressort 11 exerce sur le second clapet 7 une seconde force de rappel repoussant le second clapet 7 en direction du second épaulement 5. Le ressort 10 et le ressort 11 sont coaxiaux avec l'axe longitudinal 6 de la conduite. La force de rappel exercée par le ressort 11 sur le second clapet 7 est supérieure à la force de poussée exercée par le ressort 10 sur le second clapet 7 de sorte que, en l'absence d'autres forces, le ressort 11 maintient de manière étanche le second clapet 7 contre le second épaulement 5 et le ressort 10 maintient le premier clapet 7 contre le premier épaulement 5. La seconde tige d'activation 9 présente une longueur inférieure à la distance entre la face interne du premier clapet 7 et le second clapet 7 selon la direction longitudinale 6, i.e. un espace sépare la seconde tige d'activation 9 du second clapet 7 lorsque la première valve et la seconde valve sont fermées.

Afin d'assurer la liaison étanche entre les connecteurs 2 lorsqu'ils sont accouplés, un premier connecteur comporte une douille cylindrique 13 présentant un diamètre interne légèrement supérieur au diamètre externe de l'autre connecteur 2. La douille 13 est coaxiale à l'enveloppe 3 du premier connecteur.

Comme visible sur la figure 3, le premier connecteur 2 comporte avantageusement une conduite d'arrivée de gaz de balayage 17. Cette conduite d'arrivée 17 est connectée à une source d'alimentation en gaz de balayage pour effectuer un balayage de l'espace compris entre les deuxièmes valves 7 lors de la procédure de connexion et la procédure de déconnexion des connecteurs 2. La conduite d'arrivée 17 débouche dans l'espace tampon 16 du premier connecteur 2.

Le gaz de balayage utilisé lors de la procédure de déconnexion est un gaz inerte, tel l'azote ou tout autre gaz adapté, Ainsi, dans l'état déconnecté représenté sur la figure 1, le gaz inerte permet de créer un tampon inerte dans l'espace tampon 16 entre l'atmosphère extérieure et le méthane, par mesure de sécurité. Lors de la procédure de connexion, le gaz de balayage utilisé peut être un gaz inerte ou tout autre gaz qui ne présente pas d'incompatibilité avec le contenu des canalisations 1, par exemple du méthane, mais évidemment ni de l'air ni de l'oxygène.

Le second connecteur 2 comporte une conduite d'évacuation 18 pour évacuer le gaz et/ou le liquide de l'espace compris entre les deuxièmes clapets 7 lors de la procédure de connexion et la procédure de déconnexion des connecteurs 2. Cette conduite d'évacuation 18 est, par exemple, reliée à un dispositif de stockage de gaz, à une pompe à vide ou encore à l'atmosphère. Des vannes 30 et 31 sont de préférence montées sur les conduites 17 et 18 pour sélectivement ouvrir et fermer ces conduites.

On va maintenant décrire la procédure de connexion et la procédure de déconnexion des connecteurs 2.

La figure 1 représente les deux connecteurs dans un état déconnecté. Dans l'état déconnecté, les ressorts 10 et 11 maintiennent les clapets 7 contre les épaulements 5 de manière étanche, i.e. les deux valves sont fermées. Le GNL contenu dans les canalisations 1 est ainsi confiné de manière sûre. La première tige d'activation 8 fait saillie hors de la conduite 4. Afin de les connecter, les deux connecteurs 2 sont positionnés coaxialement en vis-à-vis.

La figure 2 représente les deux connecteurs accouplés dans un état de pré-connexion. Afin d'atteindre l'état de pré-connexion, les deux connecteurs 2 de la figure 1 sont rapprochés le long de l'axe longitudinal 6 de sorte que le second connecteur est inséré dans la douille 13. La douille 13 comporte sur sa face interne un joint torique non représenté qui coopère avec la surface externe du second connecteur afin d'assurer l'étanchéité de la liaison entre les deux connecteurs.

La douille 13 ferme ainsi un espace de liaison 15 étanche entre les premières valves des deux connecteurs 2. La fermeture de manière étanche de l'espace de liaison 15 emprisonne de l'air ambiant entre les connecteurs 2.

Dans l'état de pré-connexion, les premières tiges d'activations 8 sont en contact mais n'exercent pas de forces à l'encontre des ressorts 10. Ainsi, les premières valves et les secondes valves des deux connecteurs restent fermées.

La figure 3 représente un état de connexion intermédiaire des deux connecteurs. L'état de connexion intermédiaire est obtenu en rapprochant les connecteurs 2 de la figure 2 le long de l'axe 6.

Le rapprochement des deux connecteurs 2 depuis l'état de pré-connexion représenté en figure 2 entraîne le rapprochement des premiers épaulements 5. Lors de ce rapprochement des deux connecteurs, le rapprochement des premiers clapets 7 est bloqué par la butée des premières tiges d'activation 8 l'une contre l'autre. La différence de déplacement entre les premiers épaulements 5 et les premiers clapets 7 ouvre la première valve de chaque connecteur 2. L'ouverture des premières valves des connecteurs 2 met en communication des espaces tampons 16 des conduites 4 situés entre la première valve et la seconde valve de chaque connecteur 2 avec l'espace de liaison 15.

Le blocage en position des premiers clapets 7 bloque également en position les secondes tiges d'activations 9. Les seconds clapets 7 maintenus contre les seconds épaulements 5 se déplacent avec les connecteurs 2. Les seconds clapets 7 se rapprochent donc des secondes tiges d'activation 9. Ainsi, dans l'état de connexion intermédiaire, les secondes tiges d'activation 9 viennent juste en contact avec les seconds clapets 7. Cependant, ce contact a lieu sans que les secondes tiges d'activation 9 n'exercent de force sur les seconds clapets 7 à l'encontre des ressorts 11. Les secondes valves restent donc dans une position fermée obstruant les conduites 4 et empêchant le GNL contenu dans la canalisation 1 de circuler entre les connecteurs 2.

Lorsque les connecteurs sont accouplés dans l'état de connexion intermédiaire, un gaz de balayage est injecté dans l'espace tampon du premier connecteur 2 via la conduite d'arrivée 17. En outre, la conduite d'évacuation 18 est également ouverte. L'arrivée via la conduite 17 et l'évacuation simultanée de gaz via la conduite 18 permet de remplacer le gaz contenu dans ces espaces tampons 16 ainsi que l'air emprisonné dans l'espace de liaison 15 par le gaz de balayage, comme représenté en figure 4.

Lorsque les espaces tampons 16 et l'espace de liaison 15 ne contiennent plus que du gaz de balayage, la conduite d'arrivée 17 et la conduite d'évacuation 18 sont refermées. Une fois ces conduites 17, 18 refermées, les deux connecteurs 2 sont rapprochés une nouvelle fois le long de l'axe longitudinal 6 depuis l'état de connexion intermédiaire jusqu'à un état entièrement connecté représenté à la figure 5.

Lors de ce rapprochement, les premières tiges d'activation 8 empêchent toujours le rapprochement des premiers clapets 7, maintenant les premières valves ouvertes. De manière similaire, la butée des seconds clapets 7 sur les secondes tiges d'activation 9 bloque le déplacement des seconds clapets alors que les seconds épaulements 5 se rapprochent l'un de l'autre. Le blocage des seconds clapets 7 associé au rapprochement des seconds épaulements 5 ouvre les secondes valves des deux connecteurs 2. L'ouverture des secondes valves libère les conduites 4 des deux connecteurs de sorte que le GNL contenu dans les canalisations 1 peut s'écouler librement depuis le premier connecteur vers le second connecteur comme représenté en figure 5.

La déconnexion des connecteurs suit un schéma inverse au schéma de connexion décrit ci-dessus. Les figures 6 à 7 représentent les différentes étapes de la déconnexion de deux connecteurs 2 depuis l'état entièrement connecté tel que représenté en figure 5 à l'état déconnecté tel que représenté en figure 1.

Dans un premier temps, les connecteurs 2 connectés sont éloignés de manière à passer de l'état connecté, i.e. toutes valves ouvertes, à l'état de connexion intermédiaire, i.e. premières valves ouvertes et seconde valves fermées. Lors de cet éloignement, du GNL est emprisonné dans les espaces tampons 16 et dans l'espace de liaison 15. Pour évacuer ce GNL, une purge telle que décrite ci-dessus en regard des figure 3 et 4 est réalisée. Cette purge comprend l'injection de gaz de balayage via la conduite d'arrivée 17 ainsi que l'évacuation du produit contenu dans les espaces tampons 16 et dans l'espace de liaison 15 via la conduite d'évacuation 18. Cette purge est réalisée jusqu'à remplacement complet du GNL emprisonné dans les espaces tampons 16 et dans l'espace de liaison 15 par du gaz de balayage. La figure 6 représente les connecteurs 2 dans l'état de connexion intermédiaire durant la purge du GNL emprisonné.

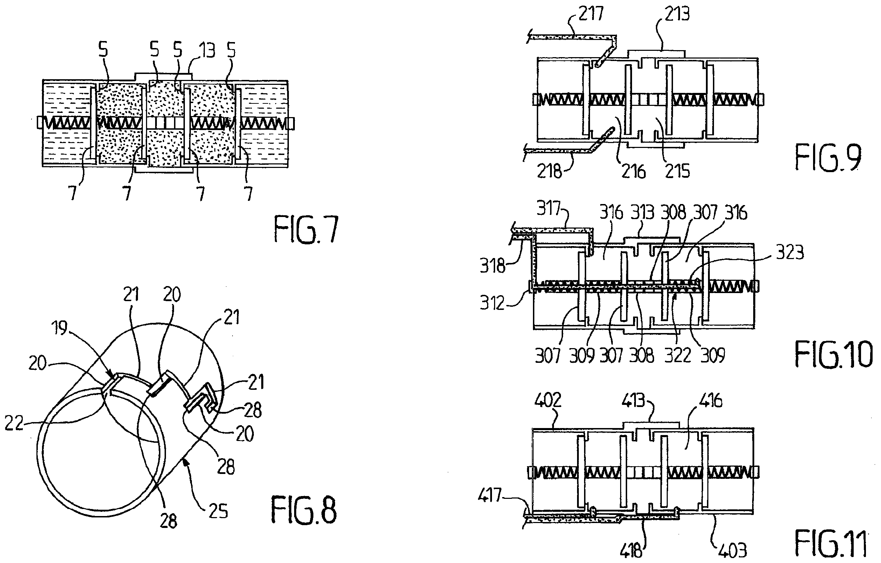

Une fois la purge réalisée, la conduite d'arrivée 17 et la conduite d'évacuation 18 sont fermées. Les deux connecteurs sont alors éloignés depuis le l'état de connexion intermédiaire jusqu'à l'état de pré-connexion, i.e. toutes valves fermées comme représenté en figure 7.

Comme l'espace de liaison 15 ne comporte que du gaz de balayage inerte, les connecteurs peuvent être séparés sans risque d'inflammation pour les utilisateurs. Seul du gaz de balayage est libéré lors de cette déconnexion.

Dans une variante non représentée, la conduite d'arrivée 17 et/ou la conduite d'évacuation 18 peuvent déboucher directement dans l'espace de liaison 15 entre les deux connecteurs. Par exemple, les conduites peuvent toutes les deux traverser la douille 13 et déboucher dans l'espace de liaison 15.Un mécanisme de blocage peut être installé sur les connecteurs 2 afin de verrouiller les connecteurs sélectivement dans les différents états fonctionnels décrits ci-dessus, à savoir état de connexion intermédiaire, état de pré-connexion et état entièrement connecté. Un tel mécanisme de blocage sert par exemple, dans l'état de connexion intermédiaire, à empêcher le rapprochement ou l'éloignement entre les connecteurs tant que les espaces tampons et l'espace de liaison n'ont pas été purgés.

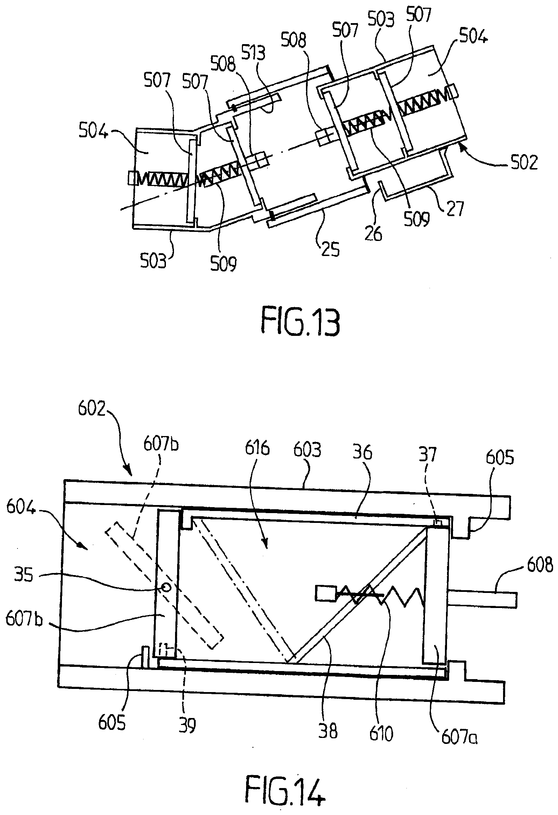

Les figures 8 et 13 représentent un exemple de réalisation du mécanisme de blocage des connecteurs. Sur la figure 13, les éléments analogues ou identiques à ceux de la figure 1 portent le même chiffre de référence augmenté de 500 et ne seront pas décrits à nouveau.

Comme visible sur la figure 13, le mécanisme de blocage est formé par une bague cylindrique circulaire creuse 25 montée sur l'un des connecteurs et un ergot 26 monté sur l'autre connecteur. Cette bague 25 est montée autour de la douille 513 du premier connecteur 502 et fait saillie au-delà de la douille 513. L'ergot 26 est fixé sur l'extérieur de l'enveloppe 503 du second connecteur par l'intermédiaire d'un support 27 de manière à s'engager dans une rainure de guidage ménagée dans la bague 25. De préférence, l'ergot 26 est agencé de manière à coopérer avec le diamètre extérieur de la bague 25, de manière à ne pas gêner l'assemblage étanche de la douille 513 avec l'autre connecteur 502.

Comme visible sur la figure 8, la bague 25 comporte une rainure 19 traversant l'épaisseur de la paroi de la bague 25. La rainure 19 assez large pour que l'ergot 26 puisse être inséré et déplacé le long de la rainure 19. La rainure 19 comporte une succession de sections de translation 20 et de sections de blocage 21 alternées.

Les sections de translation 20 se développent parallèlement à l'axe 6 de l'enveloppe 3 du premier connecteur 2. Les sections de blocage 21 se développent selon une direction circonférentielle de l'enveloppe 3. La rainure 19 comporte une ouverture 22 située sur une tranche de la bague 25. Lors de la connexion de deux connecteurs 2, l'ergot 26 est inséré dans la rainure 19 via l'ouverture 22. Le passage d'un état de connexion à un autre est possible lorsque l'ergot 26 est situé dans une section de translation 20. Un déplacement relatif des connecteurs 2 se traduit alors par une translation de l'ergot 26 le long d'une section de translation 20. De même, le blocage dans un état de connexion des connecteurs est possible lorsque l'ergot 26 est situé dans une section de blocage 21. Le blocage en position des connecteurs est réalisé par une simple rotation de la bague 25 de manière à déplacer l'ergot 26 le long d'une section de blocage 21 afin de le décaler par rapport à la section de translation 20. La rainure 19 comporte, dans le prolongement de chaque section de translation 20 une section d'arrêt 28. Lorsque l'ergot 26 est logé dans une de ces sections d'arrêt 28, il n'est pas en vis-à-vis d'une section de blocage 21 et la rotation de la bague 25 est impossible. La section d'arrêt 28 constitue une position stable pour l'ergot 26 compte tenu des ressorts de rappel 10 et 11.

Dans un premier mode de réalisation la bague 25 est fixe sur le premier connecteur. Dans ce premier mode de réalisation, la rotation de l'ensemble formé par le premier connecteur et la bague 25 par rapport au second connecteur permet le déplacement de l'ergot 26 dans une des sections de blocage 21.

Dans un second mode de réalisation, la bague 25 est montée pivotante sur le premier connecteur. Dans ce second mode de rotation, la rotation de la bague 25 par rapport à l'autre connecteur permet le déplacement de l'ergot 26 dans les sections de blocage 21. Alternativement, le support 27 de l'ergot 26 peut être monté de manière pivotante sur le connecteur qui le porte.

Dans un exemple de réalisation non représenté, les sections de translations se développent selon une direction non parallèle à l'axe de l'enveloppe. Dans cet exemple, les sections de translations comportent cependant une composante selon la direction de rapprochement des connecteurs,

Les figures 9 à 11 représentent des variantes de réalisation des connecteurs dans lesquelles l'arrivée de gaz de balayage et l'évacuation de gaz et/ou de liquide sont situées à différentes localisations.

Sur la figure 9, les éléments analogues ou identiques à ceux de la figure 1 portent le même chiffre de référence augmenté de 200. La figure 9 représente une variante dans laquelle la conduite d'arrivée 217 et la conduite d'évacuation 218 débouchent toutes deux dans le même espace tampon 216.

Sur la figure 10, les éléments analogues ou identiques à ceux de la figure 1 portent le même chiffre de référence augmenté de 300. La variante représentée en figure 10 comporte aussi une conduite d'arrivée 317 et une conduite d'évacuation montées sur le premier connecteur. La conduite d'évacuation est en deux parties. Une première partie 318 traverse successivement le plot fixe 312, le second clapet 307, la seconde tige d'activation 309, le premier clapet 307 et la première tige d'activation 308 du premier connecteur 302 et débouche au bout de la tige 308 du premier connecteur en vis-à-vis de la tige 308 du second connecteur. La deuxième partie 322 de la conduite d'évacuation est située dans le second connecteur 302 et débouche d'une part au bout de la tige 308 en vis-à-vis de la tige 308 du premier connecteur et, d'autre part, sur une paroi latérale 323 de la seconde tige d'activation 309. Dans l'état de connexion intermédiaire des connecteurs 302, le contact entre les tiges 308 des deux connecteurs 302 permet la liaison entre la partie 322 du second connecteur et la partie 318 du premier connecteur.

Sur la figure 11, les éléments analogues ou identiques à ceux de la figure 1 portent le même chiffre de référence augmenté de 300. Dans la variante de la figure 11, la conduite d'évacuation 418 est logée à l'intérieur de ou sur la douille 413 assurant l'étanchéité entre les connecteurs. L'enveloppe 403 du second connecteur 402 comporte un orifice qui débouche dans l'espace tampon 416. Ainsi, lorsque la douille 413 entoure le second connecteur, la conduite d'évacuation 418 communique avec l'espace tampon 416 du second connecteur via l'orifice du second connecteur.

Les enveloppes 3 des connecteurs 2 ne sont pas forcément droites. Ainsi, la figure 13 montre un mode de réalisation dans lequel une enveloppe 503 est coudée. Pour le reste, le fonctionnement des connecteurs 502 est identique au mode de réalisation des figures 1 à 7.

Un avantage des connecteurs décrits ci-dessus est l'asservissement mécanique de l'état de la deuxième valve à l'état de la première valve par la tige d'activation 9. En effet, en l'absence d'accès extérieur à la deuxième valve, la seule façon de la commuter dans l'état ouvert est de commuter la première valve dans l'état d'ouverture maximum, ce qui est obtenu dans l'état entièrement connecté décrit plus haut. Ainsi, l'ouverture de la deuxième valve ne se produit normalement que dans l'état accouplé des connecteurs.

Réciproquement, l'asservissement mécanique par l'effet de la tige d'activation 9 et des ressorts de rappel 10 et 11 assure que la fermeture de la première valve entraine nécessairement la fermeture de la deuxième valve. Ainsi, le désaccouplement des connecteurs entraine nécessairement la fermeture des deux valves, ce qui garantit une bonne sûreté de fonctionnement des connecteurs.

L'homme du métier réalisera que ces asservissements mécaniques peuvent être obtenus par d'autres moyens de liaison faisant coopérer les clapets entre eux.

En outre, l'existence de l'état de connexion intermédiaire, permettant une ouverture des premières valves sans ouverture des deuxièmes valves, présente l'avantage de pouvoir créer un tampon de gaz inerte ou de tout autre produit approprié dans chaque connecteur avant déconnexion. Il permet aussi de balayer l'espace de liaison entre les premières valves avec tout produit approprié lors de la connexion des connecteurs, de manière à garantir une absence de contact du produit contenu dans les canalisations 1 avec l'air ambiant.

L'existence de l'état de pré-connexion, dans lequel une liaison étanche est réalisée entre les connecteurs avant même d'ouvrir les premières valves offre l'avantage d'éviter toute communication directe des espaces tampons avec l'atmosphère ambiante. Dans une variante de réalisation, l'état de pré-connexion peut être supprimé.

En référence à la figure 14, on va maintenant décrire un connecteur 602 ayant un fonctionnement légèrement différent des précédents. Sur la figure 14, les éléments analogues ou identiques à ceux de la figure 1 portent le même chiffre de référence augmenté de 600.

Dans le mode de réalisation de la figure 14, l'asservissement mécanique entre la deuxième valve et la première valve est moins contraignant que précédemment. Plus précisément, un dispositif de verrouillage de la deuxième valve est inséré dans le connecteur 602 et l'état de la première valve asservit, non plus l'état de la deuxième valve elle-même, mais l'état du dispositif de verrouillage de la deuxième valve.

Comme précédemment, la première valve comporte un clapet 607a monté mobile en translation à l'encontre d'un ressort de rappel 610 et rappelé vers un état fermé dans lequel il coopère avec le siège de clapet 605. En revanche, la deuxième valve est ici une vanne rotative 607b, montrée en trait interrompue dans l'état ouvert et en trait continu dans l'étant fermé. La vanne rotative 607b est solidaire d'une tige d'axe 35 montée pivotante à travers l'enveloppe 603 et traversant diamétralement celle-ci. La tige d'axe 35 fait saillie à l'extérieur de l'enveloppe 603 pour permettre de tourner sélectivement la vanne rotative 607b dans l'état ouvert et l'état fermé, par exemple manuellement ou via un moteur d'actionnement. Ainsi, la commutation de la vanne rotative 607b n'est pas entrainée automatiquement par la commutation du clapet 607a dans ce cas.

Le dispositif de verrouillage de la deuxième valve comporte une bague 36 montée pivotante dans l'espace tampon 616 de la canalisation 604 sans degré de liberté en translation. La bague 36 porte sur sa surface interne une rainure hélicoïdale 38, dans laquelle est engagé un picot 37 solidaire du clapet 607a. La coopération du picot 37 avec la rainure 38 asservit le déplacement de translation du clapet 607a à un mouvement de rotation de la bague 36. La bague 36 est ainsi entrainée en rotation, en fonction de la position du clapet 607a, entre :
- une position de verrouillage correspondant à la position fermée du clapet 607a montrée sur la figure 14, et
- une position de déverrouillage correspondant à la position ouverte du clapet 607a non représentée.

Dans la position de verrouillage, la bague 36 verrouille la vanne rotative 607b dans l'état fermé montré sur la figure 14. La vanne rotative 607b ne peut alors pas être ouverte en agissant sur la tige d'axe 35. Ce verrouillage est obtenu par exemple à l'aide d'un pêne 39 porté par la bague 36 et qui fait saillie radialement vers l'intérieur pour s'engager dans une gâche, réalisée sous la forme d'une rainure ménagée dans la surface périphérique de la vanne rotative 607b.

Dans la position de déverrouillage, le pêne 39 de la bague 36 se retrouve au droit d'une ouverture d'entrée de la gâche associée, ce qui libère les déplacements de la vanne rotative 607b. La vanne rotative 607b ne peut alors être librement ouverte et fermée en agissant sur la tige d'axe 35.

Grâce à ces caractéristiques, la seule façon de commuter la vanne rotative 607b dans l'état ouvert est de commuter d'abord la première valve dans l'état d'ouverture, ce qui est obtenu dans l'état connecté des connecteurs 602 comme dans les modes de réalisation décrits plus haut. Ainsi, l'ouverture de la deuxième valve ne se produit normalement que dans l'état accouplé des connecteurs.

Dans ce mode de réalisation, le désaccouplement des connecteurs entraine nécessairement la fermeture de la première valve et le verrouillage de la deuxième valve, qui devra avoir été fermée auparavant à l'aide de sur la tige d'axe 35. Une bonne sûreté de fonctionnement des connecteurs est également obtenue dans ce cas, du moment que l'opérateur suit la procédure prévue.

L'homme du métier réalisera que ces asservissements mécaniques peuvent être obtenus par d'autres moyens de liaison faisant coopérer les valves entre elles.

Enfin, des conduites d'arrivée et d'évacuation peuvent être prévues dans ce mode de réalisation de manière analogue aux précédents.

Les dispositifs de connexion décrits ci-dessus peuvent être utilisés dans différentes applications où des conduites de GNL sont employées, par exemple pour remplir ou vider un réservoir de GNL dans une installation terrestre ou dans un ouvrage flottant comme un navire méthanier ou autre.

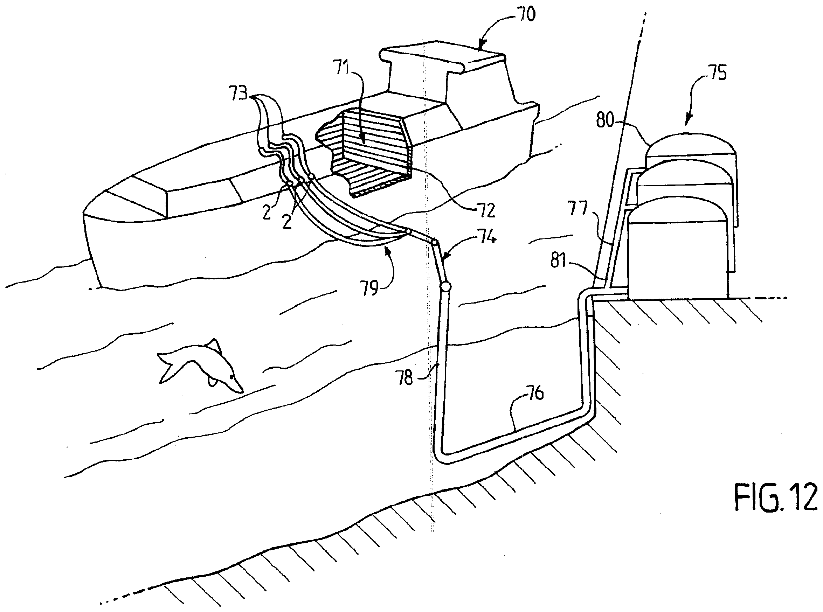

En référence à la figure 12, une vue écorchée d'un navire méthanier 70 montre une cuve étanche et isolée 71 de forme générale prismatique montée dans la double coque 72 du navire. Des canalisations de chargement/déchargement 73 disposées sur le pont supérieur du navire peuvent être raccordées, au moyen de connecteurs 2 tels que décrits ci-dessus, à un terminal maritime ou portuaire pour transférer une cargaison de GNL depuis ou vers la cuve 71.

La figure 12 représente un exemple de terminal maritime comportant un poste de chargement et de déchargement 75, une conduite sous-marine 76 et une installation à terre 77. Le poste de chargement et de déchargement 75 est une installation fixe off-shore comportant un bras mobile 74 et une tour 78 qui supporte le bras mobile 74. Le bras mobile 74 porte un faisceau de tuyaux flexibles isolés 79 pouvant se connecter aux canalisations de chargement/déchargement 73. Le bras mobile 74 orientable s'adapte à tous les gabarits de méthaniers. Une conduite de liaison non représentée s'étend à l'intérieur de la tour 78. Le poste de chargement et de déchargement 75 permet le chargement et le déchargement du méthanier 70 depuis ou vers l'installation à terre 77. Celle-ci comporte des cuves de stockage de gaz liquéfié 80 et des conduites de liaison 81 reliées par la conduite sous-marine 76 au poste de chargement ou de déchargement 75. La conduite sous-marine 76 permet le transfert du gaz liquéfié entre le poste de chargement ou de déchargement 75 et l'installation à terre 77 sur une grande distance, par exemple 5 km, ce qui permet de garder le navire méthanier 70 à grande distance de la côte pendant les opérations de chargement et de déchargement.

Pour engendrer la pression nécessaire au transfert du gaz liquéfié, on met en oeuvre des pompes embarquées dans le navire 70 et/ou des pompes équipant l'installation à terre 77 et/ou des pompes équipant le poste de chargement et de déchargement 75.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

Ainsi, la conduite d'arrivée de gaz de balayage et la conduite d'évacuation de gaz et/ou de liquide peuvent déboucher dans l'un ou l'autre des espaces tampons des connecteurs, ou encore dans l'espace de liaison entre eux. Le mécanisme de blocage peut prendre toute autre forme adaptée, par exemple un système vis-écrou. De même, les connecteurs décrits ci-dessus dans le cadre du transfert de GNL sont applicables pour le transfert de tout fluide nécessitant un niveau de sécurité élevé.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes.

Dans les revendications, tout signe de référence entre parenthèses ne saurait être interprété comme une limitation de la revendication.

## Revendications

1. Dispositif de connexion pour connecter deux circuits de fluide, le dispositif de connexion comportant un premier connecteur (2, 502, 602) destiné à être monté sur un premier circuit de fluide (1) et un second connecteur (2, 502, 602) destiné à être monté sur un second circuit de fluide (1),
dans lequel chaque connecteur comporte :
- une conduite de fluide (4, 504, 604) présentant une première extrémité destinée à être montée sur le circuit de fluide et une seconde extrémité destinée à coopérer avec la seconde extrémité de la conduite de l'autre connecteur pour former un passage de fluide entre le premier connecteur et le second connecteur,
- une première valve (7, 307, 507, 607a) située dans la conduite de fluide et apte à sélectivement obstruer ou libérer un espace intérieur de la conduite de fluide,
- une seconde valve (7, 307, 507, 607b) située dans la conduite de fluide entre la première valve et la première extrémité du connecteur et apte à sélectivement obstruer ou libérer l'espace intérieur de la conduite,
- dans lequel l'espace intérieur de la conduite de fluide comporte un espace tampon (16, 216, 316, 416) délimité par une paroi interne de la conduite de fluide, la première valve et la seconde valve,
- un premier actionneur (8, 308, 508, 608) apte à actionner la première valve entre une position ouverte libérant la conduite et une position fermée obstruant de manière étanche la conduite de fluide,
- un second actionneur (9, 309, 509, 35) apte à actionner la seconde valve entre une position ouverte libérant la conduite et une position fermée obstruant la conduite de manière étanche,
le dispositif de connexion comportant en outre
- un élément d'accouplement (13, 213, 313, 413, 513) apte à accoupler de manière étanche dans une position d'accouplement les deux connecteurs de sorte que les espaces intérieurs des conduites de fluide des deux connecteurs sont reliés de manière étanche au niveau des secondes extrémités des conduites et forment, entre les premières valves des deux connecteurs, un espace inter-connecteurs (15, 215) étanche par rapport à l'extérieur des conduites de fluide,
**caractérisé en ce que** le dispositif de connexion comporte
- un mécanisme de blocage (25, 26) apte à bloquer la translation relative des connecteurs (2, 502) d'une part dans une position entièrement connectée et d'autre part dans une position de connexion intermédiaire, la position de connexion intermédiaire étant située entre une position déconnectée et la position entièrement connectée, la position déconnectée correspondant à une position dans laquelle les connecteurs sont disjoints et les valves de chaque connecteur sont fermées, la position de connexion intermédiaire étant **caractérisée par le fait que** :
∘ les conduites de fluide (4, 504) sont reliées de manière étanche l'une à l'autre,
∘ les premières valves (7, 507) de chaque connecteur sont ouvertes de sorte que les espaces tampons (16) des deux connecteurs sont en communication avec l'espace inter-connecteurs (15),
∘ les secondes valves (7, 507) de chaque connecteur sont fermées et obstruent les conduites de fluides.
et en ce que
- un des connecteurs comporte une arrivée de gaz de balayage (17, 217, 317, 417) débouchant dans l'espace intérieur entre la seconde valve et la seconde extrémité de la conduite et destinée à être connectée à une source d'alimentation en gaz de balayage et apte à injecter du gaz de balayage dans l'espace tampon (16, 216, 316, 416) du connecteur et/ou l'espace inter-connecteurs (15, 215), et
- un des connecteurs comporte une sortie de gaz et/ou liquide (18, 218, 318, 418) débouchant dans l'espace intérieur entre la seconde valve et la seconde extrémité de la conduite et apte à évacuer le gaz et/ou le liquide contenu dans l'espace tampon (16, 216, 316, 416) dudit connecteur et/ou l'espace inter-connecteurs (15, 215).

2. Dispositif de connexion selon la revendication 1, dans lequel l'arrivée de gaz de balayage et la sortie de gaz et/ou liquide sont situées sur un seul et même connecteur.

3. Dispositif de connexion selon la revendication 1, dans lequel l'arrivée de gaz de balayage et la sortie de gaz et/ou liquide sont situées sur deux connecteurs distincts.

4. Dispositif de connexion selon l'une des revendications 1 à 3, le second actionneur (9, 309) coopère avec la première valve de manière à asservir mécaniquement un état fermé de la première valve à un état fermé de la seconde valve et asservir mécaniquement un état ouvert de la seconde valve à un état ouvert de la première valve.

5. Dispositif de connexion selon l'une des revendications 1 à 4, dans lequel la première valve de chaque connecteur comporte :
- un premier siège de clapet (5, 605) fixé dans l'espace intérieur de la conduite,
- un premier clapet (7, 607a) mobile en translation selon la direction de la conduite de fluide par rapport au premier siège de clapet et destiné à coopérer avec le premier siège de clapet du côté de la seconde extrémité de la conduite afin d'obstruer de manière étanche la conduite de fluide du connecteur,
- un premier élément de rappel (10, 610) apte à exercer une première force de rappel repoussant le premier clapet contre le premier siège de clapet en direction de la seconde extrémité de la conduite en l'absence de force opposée,
et dans lequel le premier actionneur de chaque connecteur comporte une première tige d'activation (8, 308, 508, 608) faisant saillie depuis une face du premier clapet opposée à l'espace tampon, les premières tiges d'activation (8, 308, 508, 608) des deux connecteurs étant destinées à coopérer en butée lors du rapprochement des connecteurs de manière à bloquer le rapprochement des premiers clapets sans empêcher le rapprochement des connecteurs, ce blocage du rapprochement des premiers clapets se faisant à l'encontre de la première force de rappel de chaque premier clapet de sorte que, dans des états accouplés des deux connecteurs, la butée des premières tiges d'activations maintient les premiers clapets à distance des premiers sièges de clapet.

6. Dispositif de connexion selon la revendication 5, dans lequel la seconde valve de chaque connecteur comporte :
- Un second siège de clapet (5) fixé dans l'espace intérieur de la conduite de fluide entre le premier siège de clapet et la première extrémité de la conduite de fluide,
- Un second clapet (7, 307, 507) mobile en translation selon la direction de la conduite par rapport au second siège de clapet et destiné à coopérer avec le second siège de clapet du côté de la seconde extrémité de la conduite de façon à obstruer de manière étanche la conduite de fluide,
- Un second élément de rappel (11) apte à exercer sur le second clapet une seconde force de rappel repoussant le second clapet contre le second siège de clapet en direction de la seconde extrémité de la conduite en l'absence de force opposée,
et dans lequel le second actionneur de chaque connecteur comporte une seconde tige d'activation (9, 309, 509) s'étendant entre le premier clapet et le second clapet, la seconde tige d'activation de chaque connecteur étant destinée à transmettre le déplacement du premier clapet au second clapet afin de repousser le second clapet à l'encontre de la seconde force de rappel du second clapet en réponse au déplacement du premier clapet lorsque les deux connecteurs sont rapprochés l'un de l'autre en vue de leur accouplement de sorte que, dans la position entièrement connectée des deux connecteurs, la poussée des secondes tiges d'activation (9, 309, 509) sur une face interne des seconds clapets en vis-à-vis des premiers clapets maintient les seconds clapets à distance des seconds sièges de clapet.

7. Dispositif de connexion selon la revendication 6, dans lequel le mécanisme de blocage (25, 26) est en outre apte à bloquer la translation relative des connecteurs dans une position pré-connectée située entre la position déconnectée et la position de connexion intermédiaire, la position pré-connectée étant **caractérisée par le fait que** les connecteurs sont reliés de manière étanche l'un à l'autre et les premières et secondes valves de chaque connecteur sont fermées.

8. Dispositif de connexion selon la revendication 6 ou 7, dans lequel le mécanisme de blocage en translation relative des connecteurs comporte :
- Une bague cylindrique (25) montée sur la conduite du premier connecteur, la bague étant munie d'une rainure (19),
- un ergot (26) complémentaire de la rainure fixé sur le second connecteur,
et dans lequel la rainure comporte :
- une section d'insertion (20) dont une première extrémité forme une ouverture de la rainure sur une tranche de la bague, l'ouverture de la rainure étant destinée à recevoir l'ergot, la section d'insertion se développant selon une direction non transversale à la direction de la conduite de fluide du premier connecteur,
- une première section de blocage (21) se développant selon une direction circonférentielle de la conduite de fluide du premier connecteur depuis la section d'insertion, la première section de blocage étant destinée à bloquer le rapprochement en translation des connecteurs dans la position pré-connectée,
- une première section de liaison (20) se développant selon une direction non transversale à la direction de la conduite de fluide du premier connecteur depuis la première section de blocage,
- une seconde section de blocage (21) se développant selon une direction circonférentielle de la conduite de fluide du premier connecteur depuis la première section de liaison, la seconde section de blocage étant destinée à bloquer le rapprochement en translation des connecteurs dans la position de connexion intermédiaire,
- une seconde section de liaison (20) se développant selon une direction non transversale à la direction de la conduite de fluide du premier connecteur depuis la seconde section de blocage,
- une section d'accouplement (21) se développant selon une direction circonférentielle de la conduite de fluide du premier connecteur depuis la seconde section de liaison, la section d'accouplement étant destinée à bloquer les connecteurs dans une position d'accouplement entièrement connectée.

9. Système de transfert pour un produit fluide, le système comportant un navire (70), une première canalisation (73) et une seconde canalisation (79) connectées ensemble par un dispositif de connexion (2) selon l'une des revendications 1 à 8, les canalisations étant agencées de manière à relier une cuve (71) installée dans une coque du navire à une installation de stockage (75) flottante ou terrestre.

10. Utilisation du dispositif de connexion selon l'une des revendications 1 à 8 pour connecter deux canalisations (1) comportant chacune un connecteur (2, 502, 602) du dispositif de connexion, dans laquelle :
- On accouple les deux conduites de fluide dans une position d'accouplement dans laquelle les espaces intérieurs des conduites de fluide des deux connecteurs sont reliées au niveau des secondes extrémités des conduites de manière à former un passage étanche entre les conduites de fluide des deux connecteurs,
- On ouvre la première valve du premier connecteur de manière à libérer l'espace interne de la conduite de fluide du premier connecteur,
- On ouvre la première valve du second connecteur de manière à libérer l'espace interne de la conduire de fluide du second connecteur,
- on ouvre la seconde valve du premier connecteur de manière à libérer l'espace interne de la conduire de fluide du premier connecteur,
- on ouvre la seconde valve du second connecteur de manière à libérer l'espace interne de la conduire de fluide du second connecteur.

11. Utilisation selon la revendication 10, comportant en outre, entre l'ouverture des premières valves des deux connecteurs et l'ouverture des secondes valves des deux connecteurs :
- l'ouverture de l'arrivée de gaz de balayage (17, 217, 317, 417),
- l'ouverture de la sortie de gaz et/ou de liquide (18, 218, 318, 418),
- l'injection de gaz de balayage dans les espaces tampons des deux connecteurs et dans l'espace inter-connecteurs à travers l'arrivée de gaz de balayage,
- l'évacuation simultanée du gaz contenu dans les espaces tampons des deux connecteurs et dans l'espace inter-connecteurs à travers la sortie de manière à remplir de gaz de balayage tout l'espace compris entre les secondes valves.

12. Utilisation du dispositif de connexion selon l'une des revendications 1 à 8 pour déconnecter deux canalisations comportant chacune un connecteur du dispositif de connexion, dans laquelle:
- on ferme la seconde valve d'un premier connecteur de manière à obstruer la conduite de fluide du premier connecteur,
- on ferme la seconde valve d'un second connecteur de manière à obstruer la conduite de fluide du second connecteur,
- on ferme la première valve du premier connecteur, de manière à obstruer la conduite de fluide du premier connecteur,
- on ferme la première valve du second connecteur de manière à obstruer la conduite de fluide du second connecteur,
- on sépare les secondes extrémités des conduites de fluide.

13. Utilisation selon la revendication 12, comportant en outre, entre la fermeture des premières valves des deux connecteurs et la séparation des secondes extrémités des conduites des deux connecteurs :
- l'ouverture de l'arrivée de gaz de balayage (17, 217, 317, 417),
- l'ouverture de la sortie de gaz et/ou de liquide (18, 218, 318, 418),
- l'injection de gaz de balayage dans les espaces tampons des deux connecteurs et dans l'espace inter-connecteurs à travers l'arrivée de gaz de balayage,
- l'évacuation simultanée du gaz contenu dans les espaces tampons des deux connecteurs et dans l'espace inter-connecteurs à travers la sortie de gaz de manière à remplir de gaz de balayage tout l'espace compris entre les secondes valves.

## Patentansprüche

1. Verbindungsvorrichtung zum Verbinden zweier Flüssigkeitskreisläufe, wobei die Verbindungsvorrichtung ein erstes Verbindungsstück (2, 502, 602), dazu bestimmt, an einem ersten Flüssigkeitskreislauf (1) angeordnet zu werden, und ein zweites Verbindungsstück (2, 502, 602), dazu bestimmt, an einem zweiten Flüssigkeitskreislauf (1) angeordnet zu werden, umfasst, wobei jedes Verbindungsstück umfasst:
- eine Flüssigkeitsleitung (4, 504, 604), welche einen ersten Endabschnitt, der dazu bestimmt ist, an dem Flüssigkeitskreislauf angeordnet zu werden, und einen zweiten Endabschnitt, der dazu bestimmt ist, mit dem zweiten Endabschnitt der Leitung des anderen Verbindungsstückes zusammenzuwirken, um einen Flüssigkeitsdurchfluss zwischen dem ersten Verbindungsstück und dem zweiten Verbindungsstück zu bilden, aufweist,
- ein erstes Ventil (7, 307, 507, 607a), angeordnet in der Flüssigkeitsleitung und dazu geeignet, wahlweise einen Innenraum der Flüssigkeitsleitung zu versperren oder freizugeben,
- ein zweites Ventil (7, 307, 507, 607b), angeordnet in der Flüssigkeitsleitung zwischen dem ersten Ventil und dem ersten Endabschnitt des Verbindungssstücks und dazu geeignet, wahlweise den Innenraum der Leitung abzusperren oder freizugeben,
- wobei der Innenraum der Flüssigkeitsleitung eine Pufferzone (16, 261, 316, 416) umfasst, begrenzt durch eine Innenwand der Flüssigkeitsleitung, dem ersten Ventil und dem zweiten Ventil,
- ein erstes Stellglied (8, 308, 508, 608), dazu geeignet, das erste Ventil zwischen einer offenen, die Leitung freigebenden Position, und einer geschlossenen, die Flüssigkeitsleitung dicht absperrenden Position zu betätigen,
- ein zweites Stellglied (9, 309, 509, 35), dazu geeignet, das zweite Ventil zwischen einer offenen, die Leitung freigebenden Position, und einer geschlossenen, die Flüssigkeitsleitung dicht absperrenden Position zu betätigen,
wobei die Verbindungsvorrichtung weiterhin umfasst
- ein Kupplungselement (13, 213, 313, 413, 513), dazu geeignet, in dichter Weise die beiden Verbindungsstücke in einer Kupplungsposition zu kuppeln, so dass die Innenräume der Flüssigkeitsleitungen der beiden Verbindungsstücke in dichter Weise auf Höhe der zweiten Endabschnitte der Leitungen verbunden sind und zwischen den ersten Ventilen der beiden Verbindungsstücke einen, im Verhältnis zum Außenbereich der Flüssigkeitsleitungen, dichten Verbindungsbereich (15, 215) bilden,
**dadurch gekennzeichnet, dass** die Verbindungsvorrichtung umfasst
- einen Sperrmechanismus (25, 26), dazu geeignet, die relative Translation der Verbindungsstücke zum Einen in einer vollständig verbundenen Stellung und zum Anderen in einer Zwischenverbindungsstellung zu sperren, wobei die Zwischenverbindungsstellung zwischen der nichtverbunden Stellung und der vollständig verbundenen Stellung liegt, wobei die nicht verbundene Stellung einer Stellung, in der die Verbindungsstücke getrennt sind und die Ventile jedes Verbindungsstückes geschlossen sind, entspricht, wobei die Zwischenverbindungsstellung **dadurch gekennzeichnet ist, dass**
• die Flüssigkeitsleitungen (4, 504) in dichter Weise miteinander verbunden sind,
• die ersten Ventile (7, 507) jedes Verbindungsstückes offen sind, so dass die Pufferzonen (16) der beiden Verbindungsstücke mit dem Zwischenverbindungsraum (15) zusammenwirken,
• die zweiten Ventile (7, 507) jedes Verbindungsstückes geschlossen sind und die Flüssigkeitsleitungen versperren,
und dass
- eines der Verbindungsstücke eine Zufuhr von Spülgas (17, 217, 317, 417) umfasst, welche in den Innenraum zwischen dem zweiten Ventil und dem zweiten Endabschnitt der Leitung mündet und dazu bestimmt ist, mit einer Spülgasversorgungsquelle verbunden zu sein und dazu geeignet ist, Spülgas in die Pufferzone (16, 216, 316, 416) des Verbindungsstückes und/oder des Zwischenverbindungsraumes (15, 215) einzuleiten, und
- eines der Verbindungselemente einen Gas- und/oder Flüssigkeitsausgang (18, 218, 318, 418) umfasst, welcher in den Innenraum zwischen dem ersten Ventil und dem zweiten Endabschnitt der Leitung mündet und dazu geeignet ist, das in der Pufferzone (16, 216, 316, 416) des Verbindungsstückes und/oder des Zwischenverbindungsraumes (15, 215) befindliche Gas und/oder die Flüssigkeit auszuleiten.

2. Verbindungsvorrichtung gemäß Anspruch 1, wobei die Zufuhr des Spülgases und der Ausgang des Gases und/oder der Flüssigkeit auf demselben Verbindungsstück angeordnet sind.

3. Verbindungsvorrichtung gemäß Anspruch 1, wobei die Zufuhr des Spülgases und der Ausgang des Gases und/oder der Flüssigkeit auf zwei verschiedenen Verbindungsstücken angeordnet sind.

4. Verbindungsvorrichtung gemäß einem der Ansprüche 1 bis 3, wobei das zweite Stellglied (9, 309) mit dem ersten Ventil zusammenwirkt, so dass mechanisch ein geschlossener Zustand des ersten Ventils an einen geschlossenen Zustand des zweiten Ventils geknüpft ist, und mechanisch ein offener Zustand des zweiten Ventils an einen offen Zustand des ersten Ventils geknüpft ist.

5. Verbindungsvorrichtung gemäß einem der Ansprüche 1 bis 4, wobei das erste Ventil eines jeden Verbindungsstückes umfasst:
- einen, im Innenraum der Leitung angeordneten, ersten Ventilsitz (5, 605),
- ein erstes, entsprechend der Richtung der Flüssigkeitsleitung im Verhältnis zum ersten Ventilsitz verschiebbares Ventil (7, 607a),dazu bestimmt, mit dem ersten Ventilsitz auf Seiten des zweiten Endabschnittes der Leitung zusammenzuwirken, um die Flüssigkeitsleitung des Verbindungsstückes in dichter Weise zu sperren,
- ein erstes Rückstellelement (10, 610), dazu geeignet, eine erste Rückstellkraft auszuüben, welche das erste Ventil gegen den ersten Ventilsitz ohne Gegenkraft in Richtung des zweiten Endabschnittes der Leitung schiebt,
und wobei das erste Stellglied jedes Verbindungsstückes einen ersten Aktivierungsstift umfasst (8, 308, 508, 608), welcher von einer Seite des Ventilsitzes gegenüber der Pufferzone hervorsteht, wobei die ersten Aktivierungsstifte (8, 308, 508, 608) der beiden Verbindungsstücke dazu bestimmt sind, während der Annährung der Verbindungsstücke im Anschlag zusammenzuwirken, um die Annährung der ersten Ventile zu sperren, ohne dadurch die Annäherung der Verbindungsstücke zu verhindern, wobei die Sperre der Annäherung der ersten Ventile gegen die erste Rückstellkraft jedes ersten Ventils erfolgt, so dass im gekuppelten Zustand der beiden Verbindungsstücke der Anschlag der ersten Aktivierungsstifte die ersten Ventile in Abstand zu den ersten Ventilsitzen hält.

6. Verbindungsvorrichtung gemäß Anspruch 5, wobei das zweite Ventil jedes Verbindungsstückes umfasst:
- einen zweiten Ventilsitz (5), angeordnet im Innenraum der Flüssigkeitsleitung zwischen dem ersten Ventilsitz und dem ersten Endabschnitt der Flüssigkeitsleitung,
- ein zweites, entsprechend der Richtung der Leitung im Verhältnis zum zweiten Ventilsitz verschiebbares Ventil (7, 307, 507),dazu bestimmt, mit dem zweiten Ventilsitz auf Seiten des zweiten Endabschnittes der Leitung zusammenzuwirken, um die Flüssigkeitsleitung in dichter Weise zu sperren,
- ein zweites Rückstellelement (11), dazu geeignet, auf den zweiten Ventilsitz eine zweite Rückstellkraft auszuüben, welche das zweite Ventil gegen den zweiten Ventilsitz ohne Gegenkraft in Richtung des zweiten Endabschnittes der Leitung schiebt,
und wobei das zweite Stellglied jedes Verbindungsstückes einen zweiten Aktivierungsstift (9, 309, 509) umfasst, welcher sich zwischen dem ersten Ventil und dem zweiten Ventil erstreckt, wobei der zweite Aktivierungsstift jedes Verbindungsstückes dazu bestimmt ist, die Verschiebung des ersten Ventils auf das zweite Ventil zu übertragen, um das zweite Ventil gegen die zweite Rückstellkraft des zweiten Ventils als Erwiderung auf die Verschiebung des ersten Ventils zu schieben, während die beiden Verbindungsstücke aneinander angenähert sind in Bezug auf ihre Verkupplung, so dass in der vollständig verbundenen Stellung der beiden Verbindungsstücke der Schub der zweiten Aktivierungsstifte auf einer Innenseite des zweiten Ventils gegenüber dem ersten Ventil die zweiten Ventile in Abstand der zweiten Ventilsitze hält.

7. Verbindungsvorrichtung gemäß Anspruch 6, wobei der Sperrmechanismus (25, 26) unter anderem dazu geeignet ist, die relative Translation der Verbindungsstücke in einer Vor-Verbindungsstellung zu sperren, welche zwischen der nicht verbundenen Stellung und der Zwischenverbindungsstellung liegt, wobei die Vor-Verbindungsstellung **dadurch gekennzeichnet ist, dass** die Verbindungsstücke dicht miteinander verbunden sind und die ersten und zweiten Ventile jedes Verbindungsstückes geschlossen sind.

8. Verbindungsvorrichtung gemäß Anspruch 6 oder 7 , wobei der Sperrmechanismus der relativen Translation der Verbindungsstücke umfasst,:
- einen zylindrischen Ring (25), angebracht auf der ersten Leitung des ersten Verbindungsstückes, wobei der Ring mit einer Aussparung (19) ausgestattet ist,
- eine zusätzliche Halterung (26), angeordnet auf der Aussparung auf dem zweiten Verbindungsstück,
und wobei die Aussparung umfasst:
- einen Einführungsbereich (20), dessen erster Endabschnitt eine Öffnung der Aussparung auf einem Teil des Ringes bildet, wobei die Öffnung der Aussparung dazu geeignet ist, die Halterung aufzunehmen, wobei der Einführungsbereicll sich in eine nicht transversale Richtung zur Richtung der Flüssigkeitsleitung des ersten Verbindungsstückes erstreckt,
- einen ersten Sperrabschnitt (21), sich erstreckend von dem Einführungsbereich ausgehend in eine Umtangsrichtung der Flüssigkeitsleitung des ersten Verbindungsstückes, wobei der erste Sperrbereich dazu bestimmt ist, die translatorische Annäherung der Verbindungsstücke in der Vor-Verbindungsstellung zu sperren,
- einen ersten Verbindungsahschnitt (20), sich erstreckend in einer nicht transversalen Richtung zur Richtung der Flüssigkeitsleitung des ersten Verbindungsstückes ausgehend von dem ersten Sperrabschnitt,
- einen zweiten Sperrbereich (21), sich erstreckend von dem ersten Verbindungsabschnitt ausgehend in eine Umfangsrichtung der Flüssigkeitsleitung des ersten Verbindungsstückes, wobei der zweite Sperrabschnitt dazu bestimmt ist, die translatorische Annäherung der Verbindungsstücke in der Zwischenverbindungsstellung zu sperren,
- einen zweiten Verbindungsabschnitt (20), sich erstreckend in einer nicht transversalen Richtung zur Richtung der Flüssigkeitsleitung des ersten Verbindungsstückes ausgehend vom ersten Sperrabschnitt,
- einen Kupplungsabschnitt (21), sich erstreckend in einer Umfangsrichtung der Flüssigkeitsleitung des ersten Verbindungsstückes ausgehend vom zweiten Verbindungsabschnitt, wobei der Kupplungsabschnitt dazu bestimmt ist, die Verbindungsstücke in einer vollständig verbunden Kupplungsstellung zu sperren.

9. Transfersystem für eine Flüssigkeit, wobei das System ein Schiff (70), eine erste Rohrleitung (73) und eine zweite Rohrleitung (79), welche miteinander mit einer Verbindungsvorrichtung gemäß der Ansprüche 1 bis 8 verbunden sind, umfasst, wobei die Rohrleitungen so angeordnet sind, dass sie ein in der Schiffshülle angeordnetes Gefäß (71) mit einer erdverbundenen oder schwimmenden Speicheranlage (75) verbinden.

10. Verwendung der Verbindungsvorrichtung gemäß einem der Ansprüche 1 bis 8, um zwei Rohrleitungen (1), umfassend jeweils ein Verbindungsstück (2, 502, 602) der Verbindungsvorrichtung, zu verbinden, wobei
- die zwei Flüssigkeitsleitungen in einer Kupplungsstellung gekuppelt werden, wobei die Innenräume der Flüssigkeitsleitungen der Verbindungsstücke auf Höhe der zweiten Endabschnitte verbunden werden, um einen dichten Durchfluss zwischen den Flüssigkeitsleitungen der beiden Verbindungsstücke zu erzeugen,
- das erste Ventil des ersten Verbindungsstückes geöffnet wird, so dass der Innenraum der Flüssigkeitsleitung des ersten Verbindungsstückes freigegeben wird,
- das erste Ventil des zweiten Verbindungsstückes geöffnet wird, so dass der Innenraum der Flüssigkeitsleitung des zweiten Verbindungsstückes freigegeben wird,
- das zweite Ventil des ersten Verbindungsstückes geöffnet wird, so dass der Innenraum der Flüssigkeitsleitung des ersten Verbindungsstückes freigegeben wird,
- das zweite Ventil des zweiten Verbindungsstückes geöffnet wird, so dass der Innenraum der Flüssigkeitsleitung des zweiten Verbindungsstückes freigegeben wird.

11. Verwendung gemäß Anspruch 10, umfassend weiterhin zwischen der Öffnung des ersten Ventils der zwei Verbindungsstücke und der Öffnung der zweiten Ventile der zwei Verbindungsstücke:
- die Öffnung der Zufuhr des Spülgas (17, 217, 317, 417),
- die Öffnung des Ausganges des Gas und/oder der Flüssigkeit (18, 218, 318, 418),
- die Zufuhr des Spülgases in die Pufferzonen der zwei Verbindungsstücke und in dem Verbindungsbereich über die Zufuhr des Spülgases,
- das gleichzeitige Ausleiten des in den Pufferzonen der beiden Verbindungselemente und in dem Verbindungsbereich befindlichen Gases durch den Ausgang, indem der ganze Raum zwischen den zweiten Ventilen mit Spülgas gefüllt wird.

12. Verwendung der Verbindungsvorrichtung gemäß einem der Ansprüche 1 bis 8 zur Trennung zweier Rohrleitungen umfassend jede ein Verbindungsstück der Verbindungsvorrichtung, wobei
- das zweite Ventil eines ersten Verbindungsstückes geschlossen wird, so dass die Flüssigkeitsleitung des ersten Verbindungsstückes gesperrt wird,
- das zweite Ventil eines zweiten Verbindungsstückes geschlossen wird, so dass die Rohrleitung des zweiten Verbindungsstückes gesperrt wird,
- das erste Ventil des ersten Verbindungsstückes geschlossen wird, so dass die Flüssigkeitsleitung des ersten Verbindungsstückes gesperrt wird,
- das erste Ventil des zweiten Verbindungsstückes geschlossen wird, so dass die Rohrleitung des zweiten Verbindungsstückes gesperrt wird,
- zweite Endabschnitte der Flüssigkeitsleitungen getrennt werden.

13. Verwendung gemäß Anspruch 12, umfassend unter anderem zwischen dem Schließen der ersten Ventile der zwei Verbindungsstücke und der Trennung der zweiten Endabschnitte der zwei Verbindungsstücke:
- die Öffnung der Zufuhr des Spülgases (17, 217, 317, 417),
- die Öffnung des Ausgangs des Gases und/oder der Flüssigkeit (18, 218, 318, 418),
- die Zufuhr des Spülgases in die Pufferzonen der zwei Verbindungsstücke und in den Verbindungsbereich über die Zufuhr des Spülgases,
- das gleichzeitige Ausleiten des in den Pufferzonen der zwei Verbindungsstücke und dem Verbindungsbereich befindlichen Gases durch den Ausgang des Gases, indem der ganze Raum zwischen den zweiten Ventilen mit Spülgas gefüllt wird.

## Claims

1. A connection device for connecting two fluid circuits, the connection device comprising a first connector (2, 502, 602) designed to be mounted on a first fluid circuit (1) and a second connector (2, 502, 602) designed to be mounted on a second fluid circuit (1), wherein each connector comprises:
- a fluid conduit (4, 504, 604) having a first end designed to be mounted on the fluid circuit and a second end designed to cooperate with the second end of the conduit of the other connector to form a fluid passage between the first connector and the second connector,
- a first valve (7, 307, 507, 607a) located in the fluid conduit and capable of selectively sealing or opening an internal space of the fluid conduit,
- a second valve (7, 307, 507, 607b) located in the fluid conduit between the first valve and the first end of the connector and capable of selectively sealing or opening the internal space of the conduit,
- wherein the internal space of the fluid conduit comprises a buffer space (16, 216, 316, 416) defined by an inner wall of the fluid conduit, the first valve and the second valve,
- a first actuator (8, 308, 508, 608) capable of actuating the first valve between an open position opening the conduit and a closed position sealing the fluid conduit in a sealed manner,
- a second actuator (9, 309, 509, 35) capable of actuating the second valve between an open position opening the conduit and a closed position sealing the conduit in a sealed manner,
the connection device further comprising
- a coupling element (13, 213, 313, 413, 513) capable of sealingly coupling the two connectors in a coupled position, such that the internal spaces of the fluid conduits of the two connectors are sealingly connected in the region of the second ends of the conduits and form, between the first valves of the two connectors, an inter-connector space (15, 215) which is sealed relative to the outside of the fluid conduits,
**Characterized in that** the connecting device comprises
- a blocking mechanism (25, 26) capable of blocking the relative translation of the connectors (2, 502), on the one hand, in the fully connected position and, on the other hand, in an intermediate connected position, the intermediate connected position being located between a disconnected position and the fully connected position, the disconnected position corresponding to a position in which the connectors are unconnected and the valves of each connector are closed, the intermediate connected position being **characterized by**:
• the fluid conduits (4, 504) being sealingly connected to one another,
• the first valves (7, 507) of each connector being open such that the buffer spaces (16) of the two connectors are in communication with the inter-connector space (15),
• the second valves (7, 507) of each connector being closed and sealing the fluid conduits
and in that
- one of the connectors comprises a flushing gas inlet (17, 217, 317, 417) discharging into the buffer space between the second valve and the second end of the conduit and designed to be connected to a source for supplying flushing gas and capable of injecting flushing gas into the buffer space (16, 216, 316, 416) of the connector and/or the inter-connector space (15, 215), and
- one of the connectors comprises a gas and/or liquid outlet (18, 218, 318, 418) discharging into the internal space between the second valve and the second end of the conduit and capable of evacuating the gas and/or the liquid contained in the buffer space (16, 216, 316, 416) of said connector and/or the inter-connector space (15, 215).

2. The connection device as claimed in claim 1, wherein the flushing gas inlet and the gas and/or liquid outlet are located on one and the same connector.

3. The connection device as claimed in claim 1, wherein the flushing gas inlet and the gas and/or liquid outlet are located on two separate connectors.

4. The connection device as claimed in one of claims 1 to 3, the second actuator (9, 309) cooperating with the first valve for the automatic mechanical control of a closed state of the first valve with a closed state of the second valve and for the automatic mechanical control of an open state of the second valve with an open state of the first valve.

5. The connection device as claimed in one of claims 1 to 4, wherein the first valve of each connector comprises:
- a first valve seat (5, 605) fixed in the internal space of the conduit,
- a first flap valve (7, 607a) which is mobile in translation in the direction of the fluid conduit relative to the first flap valve seat and designed to cooperate with the first flap valve seat on the side of the second end of the conduit in order to seal the fluid conduit of the connector in a sealed manner,
- a first restoring element (10, 610) capable of exerting a first restoring force pushing back the first flap valve against the first flap valve seat in the direction of the second end of the conduit in the absence of opposing force,
and wherein the first actuator of each connector comprises a first activation rod (8, 308, 508, 608) protruding from one face of the first flap valve opposing the buffer space, the first activation rods (8, 308, 508, 608) of the two connectors being designed to cooperate in abutment when the connectors are moved toward one another so as to block the movement of the first flap valves toward one another without preventing the movement of the connectors toward one another, this blockage of the movement of the first flap valves toward one another being carried out counter to the first restoring force of each first flap valve, such that in the coupled states of the two connectors, the abutment of the first activation rods maintains the first flap valves at a distance from the first flap valve seats.

6. The connection device as claimed in claim 5, wherein the second valve of each connector comprises:
- a second flap valve seat (5) fixed in the internal space of the fluid conduit between the first flap valve seat and the first end of the fluid conduit,
- a second flap valve (7, 307, 507) which is mobile in translation in a direction of the conduit relative to the second flap valve seat and designed to cooperate with the second flap valve seat on the side of the second end of the conduit in order to seal the fluid conduit in a sealed manner,
- a second restoring element (11) capable of exerting on the second flap valve a second restoring force pushing back the second flap valve against the second flap valve seat in the direction of the second end of the conduit in the absence of opposing force,
and the second actuator of each connector comprises a second activation rod (9, 309, 509) extending between the first flap valve and the second flap valve, the second activation rod of each connector being designed to transmit the displacement of the first flap valve to the second flap valve in order to push back the second flap valve against the second restoring force of the second flap valve in response to the displacement of the first flap valve when the two connectors are moved toward one another in order to couple said connectors, such that in a fully connected position of the two connectors, the thrust of the second activation rods (9, 309, 509) on an internal face of the second flap valves towards the first flap valves maintains the second flap valves at a distance from the second flap valve seats.

7. The connection device as claimed in claim 6, wherein the blocking mechanism (25, 26) is also capable of blocking the relative translation of the connectors in a pre-connected position located between the disconnected position and the intermediate connected position, the pre-connected position being **characterized in that** the connectors are sealingly connected to one another and the first and second valves of each connector are closed.

8. The connection device as claimed in claim 6 or 7, wherein the device for blocking the relative translation of the connectors comprises:
- a cylindrical ring (25) mounted on the conduit of the first connector, the ring being provided with a groove (19),
- a lug (26) which is complementary to the groove, fixed to the second connector,
and wherein the groove comprises:
- an insertion section (20), one first end thereof forming an opening of the groove on a portion of the ring, the opening of the groove being designed to receive the lug, the insertion section extending in a direction which is not transverse to the direction of the fluid conduit of the first connector,
- a first blocking section (21) extending in a circumferential direction of the fluid conduit of the first connector from the insertion section, the first blocking section being designed to block the movement in translation of the connectors toward one another in the pre-connected position,
- a first connecting section (20) extending in a direction which is not transverse to the direction of the fluid conduit of the first connector from the first blocking section,
- a second blocking section (21) extending in a circumferential direction of the fluid conduit of the first connector from the first connecting section, the second blocking section being designed to block the movement in translation of the connectors toward one another in the intermediate connected position,
- a second connecting section (20) extending in a direction which is not transverse to the direction of the fluid conduit of the first connector from the second blocking section,
- a coupling section (21) extending in a circumferential direction of the fluid conduit of the first connector from the second connecting section, the coupling section being designed to block the connectors in a fully connected coupled position.

9. A transfer system for a fluid product, the system comprising a marine vessel (70), a first pipeline (73) and a second pipeline (79) connected together by a connection device (2) as claimed in one of claims 1 to 8, the pipelines being arranged so as to connect a tank (71) installed in a hull of the marine vessel to an offshore or land-based storage installation (75).

10. A use of the connection device as claimed in one of claims 1 to 8, to connect two pipelines (1), each comprising a connector (2, 502, 602) of the connection device, wherein:
- the two fluid conduits are coupled in a coupled position in which the internal spaces of the fluid conduits of the two connectors are connected in the region of the second ends of the conduits so as to form a sealed passage between the fluid conduits of the two connectors,
- the first valve of the first connector is opened so as to open the internal space of the fluid conduit of the first connector,
- the first valve of the second connector is opened so as to open the internal space of the fluid conduit of the second connector,
- the second valve of the first connector is opened so as to open the internal space of the fluid conduit of the first connector,
- the second valve of the second connector is opened to as to open the internal space of the fluid conduit of the second connector.

11. The use as claimed in claim 10, further comprising, between the opening of the first valves of the two connectors and the opening of the second valves of the two connectors:
- the opening of the flushing gas inlet (17, 217, 317, 417);
- the opening of the gas and/or liquid outlet (18, 218, 318, 418);
- the injection of flushing gas into the buffer spaces of the two connectors and into the inter-connector space via the flushing gas inlet,
- the simultaneous evacuation of the gas contained in the buffer spaces of the two connectors and in the inter-connector space via the outlet so as to fill the flushing gas into the entire space between the second valves.

12. The use of the connection device as claimed in one of claims 1 to 8, for disconnecting two pipelines, each comprising a connector of the connection device, wherein:
- the second valve of a first connector is closed in order to seal the fluid conduit of the first connector,
- the second valve of a second connector is closed in order to seal the fluid conduit of the second connector,
- the first valve of the first connector is closed in order to seal the fluid conduit of the first connector,
- the first valve of the second connector is closed in order to seal the fluid conduit of the second connector,
- the second ends of the fluid conduits are separated.

13. The use as claimed in claim 12, further comprising, between the closure of the first valves of the two connectors and the separation of the second ends of the conduits of the two connectors:
- the opening of the flushing gas inlet (17, 217, 317, 417);
- the opening of the gas and/or liquid outlet (18, 218, 318, 418);
- the injection of flushing gas into the buffer spaces of the two connectors and into the inter-connector space via the flushing gas inlet,
- the simultaneous evacuation of gas contained in the buffer spaces of the two connectors and in the inter-connector space via the gas outlet so as to fill flushing gas into the entire space between the second valves.
